# FASCICULE DE BREVET EUROPEEN

(11) **EP 4 330 066 B1**
(45) Date de publication et mention de la délivrance du brevet: **11.12.2024**
(21) Numéro de dépôt: 22715139.6
(22) Date de dépôt: 22.03.2022
(51) Int. Cl.: B60K 11/08, B60R 19/48

(54) **DISPOSITIF D'ENTRÉE D'AIR POUR UN RADIATEUR D'UN VÉHICULE AUTOMOBILE**
LUFTEINLASSVORRICHTUNG FÜR EINEN KÜHLER EINES KRAFTFAHRZEUGS
AIR INTAKE DEVICE FOR A RADIATOR OF A MOTOR VEHICLE

(30) Priorité: 28.04.2021 FR 2104405
(43) Date de publication de la demande: 06.03.2024
(73) Titulaire: Stellantis Auto SAS, 78300 Poissy (FR)
(72) Inventeur: BOUDAN, Julien, 91210 DRAVEIL (FR); PERON, Rodolphe, 95220 HERBLAY (FR)
(86) Numéro de dépôt international: PCT/FR2022/050522
(87) Numéro de publication internationale: WO 2022/229531

(56) Documents cités:
- FR-A1- 2 737 159
- FR-A1- 3 010 780
- FR-A1- 3 016 598
- FR-A1- 3 020 602
- US-A1- 2001 027 883
- US-A1- 2011 000 728
- US-A1- 2013 192 801

## Description

La présente invention concerne le domaine des véhicules automobiles. L'invention concerne plus particulièrement un dispositif d'entrée d'air destiné à être fixé à l'avant d'un véhicule automobile.

Un véhicule et notamment un véhicule automobile comprend généralement un radiateur de moteur qui est monté derrière la calandre du pare-chocs avant. Le radiateur est utilisé pour réguler la température du moteur en fonction de données de fonctionnement. Le radiateur est alimenté par un flux d'air ambiant passant à travers la calandre et dirigé au moyen d'un dispositif d'entrée d'air. Le dispositif d'entrée d'air doit, de préférence, former une conduite sensiblement étanche entre la peau de pare-chocs et le radiateur. De manière à limiter les vibrations, le dispositif d'entrée d'air est une pièce rigide.

Le pare-chocs d'un véhicule automobile, doit satisfaire de nombreuses prestations notamment des tests de chocs piéton. Le choc piéton correspond à un choc selon lequel le pare-chocs vient percuter la jambe d'un piéton sensiblement entre le genou et la cheville.

Lors d'un choc piéton, il est souhaitable que la jambe dudit piéton ne glisse pas sous le véhicule. Il est aussi souhaitable de limiter le risque pour le piéton de rencontrer un point dur se trouvant à l'intérieur du véhicule, derrière la peau de pare-chocs.

Le pare-chocs doit être configuré de manière à répondre aux règlementations définies pour le choc piéton, et notamment le dispositif d'entrée d'air agencé derrière la peau de pare-chocs doit être adapté pour ne pas constituer un point dur susceptible de blesser un piéton lors d'un choc frontal du véhicule.

On connait des dispositifs de pare-chocs comme dans le document EP 3429894 qui décrit un pare-chocs avant pour un véhicule automobile. Le pare-chocs comprend une structure composée de plusieurs couches qui sont reliées par des entretoises déformables. En cas de choc, la structure se déforme en dissipant les efforts reçus avec une déformation adaptée au niveau de force du choc. Cette structure permet de fournir une bonne dissipation de l'énergie lors d'un choc piéton mais ne prend pas en compte la présence d'éléments susceptibles de former des points durs derrière la peau de pare-chocs, comme par exemple d'un dispositif d'entrée d'air.

Dans le document FR 2989938, on connait un dispositif d'entrée d'air piloté implanté derrière le pare-chocs avant d'un véhicule, tel qu'un véhicule automobile. Le dispositif d'entrée d'air comprend une conduite d'air qui est fixée à la structure du véhicule par un mécanisme à biellettes. Le mécanisme permet de déplacer la conduite en fonction de la quantité d'air qui doit être fournie au radiateur. En cas de choc frontal du véhicule, le mécanisme permet aussi de déplacer la conduite dans une position escamotée en arrière de la peau de pare-chocs. Ainsi la conduite ne constitue pas un point dur à proximité de la peau de pare-chocs au moment d'un choc frontal du véhicule.

Cette solution répond aux contraintes d'un choc piéton, mais est une solution complexe, avec une grande diversité de pièces et un coût de fabrication élevé.

Les documents FR 3 016 598 A1, FR 2 737 159 A1, FR 3 020 602 A1, US 2011/000728 A1, FR 3 010 780 A1, US 2013/192801 A1 décrivent des dispositifs d'entrée d'air pour un radiateur d'un véhicule automobile et le document US 2001/027883 A1 décrit un tel dispositif conforme au préambule de la revendication 1.

L'invention a pour objectif de répondre à au moins un des problèmes et/ou inconvénients mentionnés plus haut, en proposant un dispositif d'entrée d'air pour un véhicule automobile destiné à être agencé derrière une peau de pare-chocs, le dispositif permettant au véhicule de répondre aux contraintes d'un test de choc piéton tout en étant simple au niveau de sa fabrication et de sa mise en oeuvre.

A cet effet et selon un premier aspect, l'invention a pour objet un dispositif d'entrée d'air pour un radiateur d'un véhicule automobile comprenant les caractéristiques de la revendication 1.

Le dispositif ainsi formé comprend une zone déformable en cas de choc qui est destinée à être disposée juste derrière la peau de pare-chocs. En cas de choc de type choc piéton, la zone déformable du dispositif d'entrée d'air permet de dissiper une partie des efforts générés par le choc avant que le piéton ne rencontre le point dur formé par la zone rigide du dispositif d'entrée d'air. La zone rigide du cadre du dispositif d'entrée d'air permet de rigidifier ce dernier et de réduire les vibrations causées par le flux d'air entrant pendant la marche du véhicule. Un tel dispositif d'entrée d'air est simple à réaliser et comporte peu de pièces, et des pièces non complexes.

Selon l'invention, les zones rigide et déformable comprennent respectivement un bord avant et un bord arrière, le bord arrière de la zone rigide étant agencé au niveau du bord arrière du cadre, le bord avant de la zone déformable étant agencé au niveau du bord avant du cadre, et le bord arrière de la zone déformable étant agencé au niveau du bord avant de la zone rigide ; la largeur de la zone déformable varie selon la direction longitudinale du dispositif de sorte que le bord arrière de la zone déformable montre un motif en créneaux ou en sinusoïde.

Le motif en créneaux ou en sinusoïde est une solution de fabrication simple, qui permet de rigidifier la zone déformable.

Avantageusement, les moyens favorisant la déformation de la zone déformable en cas de choc comprennent au moins un des éléments suivants : un matériau différent par rapport au matériau de la zone rigide, une épaisseur de paroi réduite par rapport à l'épaisseur de paroi de la zone rigide, une ou plusieurs ondulations, ou une combinaison de ceux-ci. Ces moyens ne nécessitent pas l'ajout de pièces pour la réalisation des parois du cadre.

Avantageusement, le dispositif est réalisé en un matériau plastique, et les zones rigide et déformable d'au moins une paroi sont réalisées par surmoulage par injection.

De préférence, la zone déformable s'étend dans une direction longitudinale du dispositif, sur toute la longueur du bord avant du cadre.

Dans des modes de réalisation, le bord avant du cadre forme une lèvre configurée pour former de réaliser un joint souple pour le contact avec une peau de pare-chocs. Le bord avant du cadre est en utilisation, pressé contre la peau de pare-chocs. Le joint souple ainsi formé permet supprimer une fuite de l'air entre la peau de pare-chocs et le dispositif.

Avantageusement, le dispositif est configuré de manière à ce que ses dimensions selon sa direction transversale, c'est-à-dire la direction longitudinale du véhicule, soient plus grandes que l'espace dans lequel le dispositif est destiné à être monté. Ainsi lors du montage du dispositif d'entrée d'air, le bord avant du cadre est écrasé contre la peau de pare-chocs réalisant un contact plus serré. L'air entrant à travers la calandre est ainsi mieux guidé dans le dispositif d'entrée d'air.

Dans des modes de réalisation, le cadre comprenant une paroi supérieure, une paroi inférieure, et des parois latérales, le dispositif est caractérisé en ce que les parois latérales comprennent une zone déformable qui s'étend depuis le bord avant jusqu'au bord arrière du cadre. Les parois latérales ne comprennent donc pas de zone rigide.

Dans des modes de réalisation, le cadre comprenant une paroi supérieure, une paroi inférieure, et des parois latérales, le dispositif est remarquable en ce que la largeur de zone déformable de la paroi supérieure entre les bords avant et arrière est supérieure à la largeur de la zone déformable de la paroi inférieure.

La différence de longueur entre les zones déformables des parois supérieure et inférieure permet de créer un effet de basculement en cas de choc avec un piéton. La jambe du piéton rencontre alors plus de résistance au niveau de la paroi inférieure du cadre du dispositif d'entrée d'air, et le piéton bascule pardessus le pare-chocs sans passer en dessous du véhicule. Cela répond à une contrainte spécifique du test de choc piéton.

Dans des modes de réalisation, le cadre comprend en outre au moins une paroi de déflection d'air, verticale, permettant de réduire le flux d'air.

La paroi de déflexion d'air est installée pour réduire la quantité d'air circulant vers le radiateur de moteur. Cette paroi peut être installée ou non en fonction de l'environnement dans lequel le véhicule est destiné à être utilisé.

Selon un deuxième aspect, l'invention concerne un véhicule automobile comprenant un pare-chocs avant avec une peau de pare-chocs, la peau de pare-chocs comprenant une calandre ; le véhicule comprenant un radiateur de moteur ; le véhicule est caractérisé en ce qu'il comprend en outre un dispositif d'entrée d'air selon le premier aspect, monté derrière la calandre de la peau de pare-chocs et fixé au radiateur de refroidissement du moteur.

L'invention sera bien comprise et d'autres aspects et avantages apparaîtront clairement à la lecture de la description qui suit, donnée à titre d'exemple en référence aux planches de dessins annexées sur lesquelles :
[Fig. 1] la figure 1 est une vue avant en perspective d'un véhicule selon un mode de réalisation de l'invention ;
[Fig. 2] la figure 2 est une vue arrière en perspective d'un détail d'un véhicule montrant une peau de pare-chocs et un dispositif d'entrée d'air selon un mode de réalisation de l'invention ;
[Fig. 3] la figure 3 est une vue en perspective avant du dispositif d'entrée d'air montré à la figure 2.

Dans la suite de la description, le terme « comprendre » est synonyme de « inclure » et n'est pas limitatif en ce qu'il autorise la présence d'autres éléments dans le dispositif, ou le véhicule auquel il fait référence. Il est entendu que le terme « comprendre » inclut les termes « consister en ».

De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ».

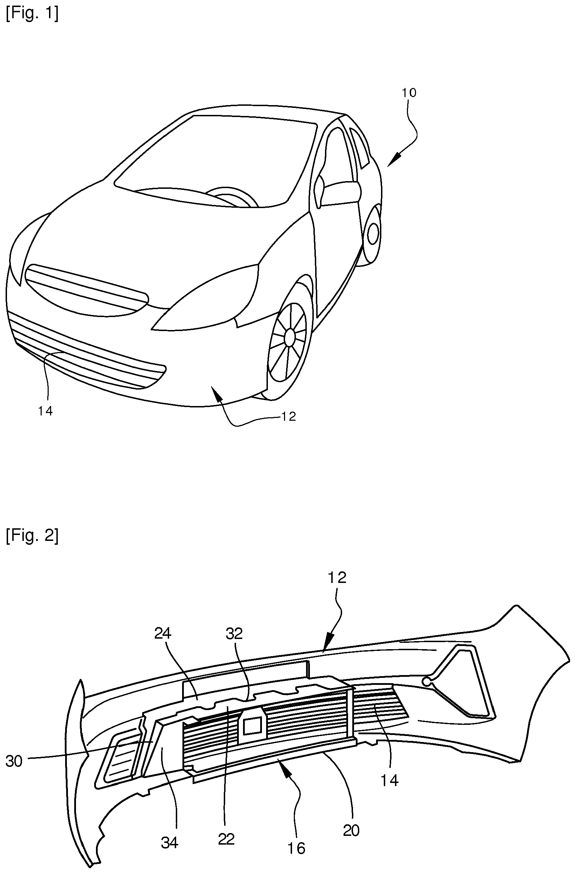

Un véhicule automobile 10 montré à la figure 1 comprend une partie avant avec un pare-chocs agencé sous un capot moteur et des blocs d'éclairage avant. Le pare-chocs comprend une peau de pare-chocs 12 qui est visible depuis l'extérieur du véhicule et qui comprend en son centre une calandre 14 formée par une grille placée devant un radiateur de moteur, non montré.

La vue de la figure 2 montre la face arrière de la peau de pare-chocs contre laquelle est monté un dispositif d'entrée d'air 16 pour le radiateur du véhicule automobile. Le dispositif d'entrée d'air est une pièce permettant de guider l'air passant à travers la grille de la calandre vers le radiateur de moteur.

Le dispositif d'entrée d'air 16 peut être un dispositif passif, fixé au radiateur avec une ouverture constante, ou un dispositif actif, c'est-à-dire qui comprend un système permettant de le déplacer ou de modifier son ouverture en fonction de paramètres donnés de manière à modifier la quantité d'air apportée au radiateur.

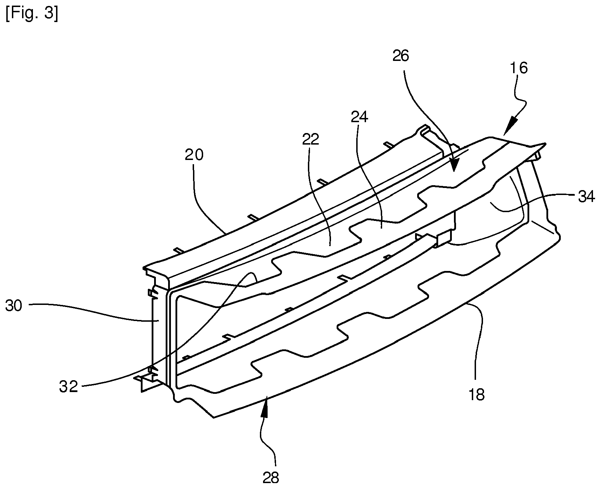

Le dispositif d'entrée d'air 16 montré à la figure 3, comprend un cadre avec un bord avant 18 destiné à être monté en contact avec la peau de pare-chocs, et un bord arrière 20 destiné à être fixé à un radiateur du véhicule automobile. Le cadre comprend en outre au moins une paroi s'étendant entre le bord avant 18 et le bord arrière 20.

Le cadre du dispositif d'entrée d'air forme une conduite d'air entre son bord avant et son bord arrière. Le cadre montré aux figures 2 et 3 a sensiblement la forme d'une conduite rectangulaire allongée selon la direction transversale du véhicule. La forme et les dimensions du cadre peuvent varier, avec par exemple une courbure au niveau du bord avant de manière à suivre une courbure de la surface de la peau de pare-chocs, une forme conique de manière à concentrer toute l'air passant à travers une large calandre vers un radiateur moins large, des coins arrondis ou tout autre forme adaptée au véhicule.

Au moins une paroi du cadre comprend une zone rigide 22 s'étendant depuis le bord arrière 18, et une zone déformable 24 en cas de choc, comprenant des moyens favorisant sa déformation et s'étendant depuis le bord avant 20.

Dans les modes de réalisation montrés aux figures 2 et 3, le cadre comprend une paroi supérieure 26, une paroi inférieure 28, et des parois latérales 30. De préférence, toutes les parois du cadre comprennent une zone rigide et une zone déformable en cas de choc. De manière alternative, seules certaines parois comprennent une zone rigide et une zone déformable en cas de choc. Par exemple, les parois latérales ayant une petite largeur entre les bords avant et arrière, elles peuvent comprendre une zone déformable qui s'étend depuis le bord avant jusqu'au bord arrière du cadre. Ainsi les parois latérales peuvent être entièrement déformable en cas de choc et ne pas comprendre de zone rigide.

Les zones rigides 22 et déformables 24 peuvent être réalisées dans tout matériau approprié. La zone déformable est préférablement réalisée dans un matériau plastique, et la zone rigide peut être réalisée matière plastique ou en métal. Les zones rigides et déformables sont de préférence réalisées en matériau plastique. L'homme du métier aura avantage à sélectionner le matériau parmi le polypropylene (PP), le polyethylene (PE), le polyphtalamide (PPA), le polyetherethercétone (PEEK), polysulfure de phénylène (PPS), le polyamideimide (PAI), le polyetherimide (PEI), le polyarylamide (PAA), ou le polyamide (PA) tel que par exemple du polyamide 6 (PA 6 ou polycaprolactame) ou du polyamide 6.6 (PA 6.6 ou polyhexaméthylène adipamide), ou leurs mélanges. Le matériau choisit pour la zone rigide 22 permet de préférence au cadre de ne pas générer de vibrations bruyantes sous l'action d'un flux d'air pendant le fonctionnement du véhicule.

La zone déformable 24 en cas de choc est configurée de manière à ne pas créer de point dur derrière la peau de pare-chocs, tout en gardant une rigidité suffisante de manière à limiter les vibrations.

Au moins une paroi du cadre peut être réalisée par surmoulage par injection de matière plastique, par exemple par bi-injection, de manière à former une zone rigide et une zone déformable. Le surmoulage est une technique connue de l'homme du métier qui permet de réaliser des pièces rapidement et avec précision.

Alternativement, au moins une paroi du cadre comprend une partie formant une zone rigide et une partie formant une zone déformable qui sont ensuite fixées l'une à l'autre par des moyens de fixation, comme par exemple des moyens de fixation par déformation élastique ou clips.

Les moyens favorisant la déformation de la zone déformable comprennent au moins un élément parmi, un matériau différent par rapport au matériau de la zone rigide, une épaisseur de paroi réduite par rapport à l'épaisseur de paroi de la zone rigide, une ou plusieurs ondulations, ou une combinaison de ceux-ci. Dans le cas où la zone déformable comprend des ondulations, celles-ci sont de préférence orientées dans la direction longitudinale du dispositif d'entrée d'air, c'est-à-dire la direction transversale du véhicule.

Les zones rigides et déformables comprennent respectivement un bord avant et un bord arrière. Le bord arrière de la zone rigide est agencé au niveau du bord arrière 20 du cadre, et le bord avant de la zone déformable est agencé au niveau du bord avant 18 du cadre. Le bord avant de la zone rigide 22 est alors confondu avec le bord arrière de la zone déformable 24. Le bord arrière 32 de la zone déformable est agencé au niveau du bord avant de la zone rigide. La largeur de la zone déformable 24 varie selon la direction longitudinale du dispositif (direction transversale du véhicule) de sorte que le bord arrière 32 de la zone déformable montre un motif en créneaux ou en sinusoïde.

Le bord arrière 32 de la zone déformable définie une ligne de jonction entre la zone déformable 24 et la zone rigide 22. Cette ligne de jonction est configurée de manière à obtenir une zone déformable la plus longue possible sans que le flux d'air ne provoque de vibrations bruyantes en traversant le cadre du dispositif d'entrée d'air.

Comme montré aux figures 2 et 3, la zone déformable montre une largeur dans la direction transversale du dispositif (direction longitudinale du véhicule) qui est variable. A certains endroits cette largeur est plus grande qu'à d'autres. Ainsi le bord arrière 32 de la zone déformable montre un motif particulier en créneaux au niveau de la ligne de jonction entre les parois supérieure 26 et inférieure 28.

Le motif en créneaux ou en sinusoïdes peut être régulier suivant la longueur du cadre du dispositif d'entrée d'air 16, varier suivant cette longueur en montrant des créneaux ou ondulations plus ou moins rapprochées, ou encore être localisé en des zones prédéterminées.

La zone déformable s'étend de préférence, sur toute la longueur du bord avant du cadre dans une direction longitudinale du dispositif.

Dans la direction transversale du dispositif, la zone déformable s'étend de préférence sur au moins 20% de la distance entre les bords avant et arrière du cadre ; de préférence au moins 30% ; de préférence au moins 40% ; de préférence au moins 50%.

Dans des modes de réalisation non montrés, le bord avant du cadre forme une lèvre qui permet de réaliser un joint souple pour le contact avec une peau de pare-chocs.

Le cadre comprenant une paroi supérieure, une paroi inférieure, et des parois latérales, le dispositif est remarquable en ce que la largeur de zone déformable de la paroi supérieure entre les bords avant et arrière est supérieure à la largeur de la zone déformable de la paroi inférieure.

Le dispositif d'entrée d'air 16 peut aussi comprendre d'autre éléments permettant de modifier la quantité d'air admise dans le dispositif. Par exemple, le cadre comprend en outre au moins une paroi de déflection d'air 34, verticale, permettant de réduire le flux d'air. Cette paroi de déflection d'air 34 peut être installée ou retirée en fonction de l'environnement dans lequel le véhicule est destiné à fonctionner. Par exemple, dans une région froide, la paroi permet de réduire l'apport d'air au radiateur de manière à permettre au moteur d'atteindre une température de fonctionnement, alors que dans une région chaude, l'absence de paroi permet un plus grand apport d'air vers le véhicule.

Dans un mode de réalisation qui ne correspond pas à l'invention est proposé un procédé de fabrication d'un cadre pour un dispositif d'entrée d'air d'un véhicule automobile, le cadre comprenant un bord avant destiné à être monté en contact avec une peau de pare-chocs du véhicule automobile, et un bord arrière destiné à être fixé à un radiateur du véhicule automobile ; le cadre comprenant en outre au moins une paroi s'étendant entre le bord avant et le bord arrière, de manière à former une conduite d'air.

Le procédé est remarquable en ce que le cadre comprend au moins une paroi comprenant une zone rigide s'étendant depuis le bord arrière ; et une zone déformable en cas de choc comprenant des moyens favorisant sa déformation et s'étendant depuis le bord avant ; et en ce que ladite paroi est produite lors d'une étape de surmoulage par injection de matériau plastique

## Revendications

1. Dispositif d'entrée d'air (16) pour un radiateur d'un véhicule automobile, le dispositif comprenant un cadre avec un bord avant (18) destiné à être placé en contact avec une peau de pare-chocs du véhicule automobile, et un bord arrière (20) destiné à être fixé au radiateur du véhicule automobile ; le cadre comprenant en outre au moins une paroi s'étendant dans une direction transversale du dispositif, entre le bord avant et le bord arrière, de manière à former une conduite d'air ; au moins une paroi comprenant une zone rigide (22) s'étendant depuis le bord arrière ; et une zone déformable (24) comprenant des moyens favorisant sa déformation en cas de choc et s'étendant depuis le bord avant jusqu'à la zone rigide, les zones rigide et déformable comprenant respectivement un bord avant et un bord arrière, le bord arrière de la zone rigide étant agencé au niveau du bord arrière (20) du cadre, le bord avant de la zone déformable étant agencé au niveau du bord avant (18) du cadre, et le bord arrière (32) de la zone déformable étant agencé au niveau du bord avant de la zone rigide ; **caractérisé en ce que** la largeur de la zone déformable (24) varie selon la direction longitudinale du dispositif de sorte que le bord arrière (32) de la zone déformable montre un motif en créneaux ou en sinusoïde.

2. Dispositif d'entrée d'air (16) selon la revendication 1, **caractérisé en ce que** les moyens favorisant la déformation de la zone déformable (24) en cas de choc comprennent au moins un des éléments suivants : un matériau différent par rapport au matériau de la zone rigide, une épaisseur de paroi réduite par rapport à l'épaisseur de paroi de la zone rigide, une ou plusieurs ondulations, ou une combinaison de ceux-ci.

3. Dispositif d'entrée d'air (16) selon l'une quelconque des revendications 1 ou 2, **caractérisé en ce que** le dispositif est réalisé en un matériau plastique, et les zones rigides (22) et déformables (24) d'au moins une paroi sont réalisées par surmoulage par injection de matière plastique.

4. Dispositif d'entrée d'air (16) selon l'une quelconque des revendications 1 à 3, **caractérisé en ce que** le bord avant (18) du cadre forme une lèvre configurée pour former un joint souple pour le contact avec une peau de pare-chocs.

5. Dispositif d'entrée d'air (16) selon l'une quelconque des revendications 1 à 4, le cadre comprenant une paroi supérieure (26), une paroi inférieure (28), et des parois latérales (30), le dispositif est **caractérisé en ce que** les parois latérales (30) comprennent une zone déformable qui s'étend depuis le bord avant (18) jusqu'au bord arrière (20) du cadre.

6. Dispositif d'entrée d'air (16) selon l'une quelconque des revendications 1 à 5, le cadre comprenant une paroi supérieure (26), une paroi inférieure (28), et des parois latérales (30), le dispositif est **caractérisé en ce que** la largeur de zone déformable de la paroi supérieure (26) entre les bords avant et arrière est supérieure à la largeur de la zone déformable de la paroi inférieure (28).

7. Dispositif d'entrée d'air (16) selon l'une quelconque des revendications 1 à 6, **caractérisé en ce que** le cadre comprend en outre au moins une paroi de déflection d'air (34), verticale, permettant de réduire le flux d'air.

8. Véhicule automobile (10) comprenant un pare-chocs avant avec une peau de pare-chocs (12), la peau de pare-chocs comprenant une calandre (14) ; le véhicule comprenant un radiateur de moteur ; le véhicule est **caractérisé en ce qu'**il comprend en outre un dispositif d'entrée d'air (16) selon l'une des revendications 1 à 7 monté derrière la calandre de la peau de pare-chocs et fixé au radiateur de refroidissement du moteur

## Patentansprüche

1. Lufteinlassvorrichtung (16) für einen Heizkörper eines Kraftfahrzeugs, wobei die Vorrichtung einen Rahmen mit einer Vorderkante (18), die in Kontakt mit einer Stoßfanghaut des Kraftfahrzeugs gebracht werden soll, und einer Hinterkante (20), die an dem Heizkörper des Kraftfahrzeugs befestigt werden soll, umfasst; wobei der Rahmen ferner mindestens eine Wand umfasst, die sich in Querrichtung der Vorrichtung zwischen der Vorderkante und der Hinterkante erstreckt, um eine Luftleitung zu bilden; mindestens eine Wand umfasst, die einen starren Bereich (22) umfasst, der sich von der Hinterkante aus erstreckt; und einen verformbaren Bereich (24) umfasst, der Mittel umfasst, um seine Verformung zu fördern Stoßausbildung, die sich von der Vorderkante zur starren Zone erstreckt, wobei die starren und verformbaren Bereiche jeweils eine Vorderkante und eine Hinterkante umfassen, wobei die Hinterkante der starren Zone an der Hinterkante (20) des Rahmens angeordnet ist, die Vorderkante der verformbaren Zone an der Vorderkante (18) des Rahmens angeordnet ist und die Hinterkante (32) der verformbaren Zone an der Vorderkante der starren Zone angeordnet ist, **dadurch gekennzeichnet, dass** die Breite der verformbaren Zone (24) in der Längsrichtung der Vorrichtung variiert, sodass die Hinterkante (32)) des verformbaren Bereichs zeigt ein zinnenförmiges oder sinusförmiges Muster.

2. Lufteinlassvorrichtung (16) nach Anspruch 1, **dadurch gekennzeichnet, dass** die Mittel, die die Verformung der verformbaren Zone (24) im Falle eines Aufpralls begünstigen, mindestens eines der folgenden Elemente umfassen: ein Material, das sich von dem Material der starren Zone unterscheidet, eine Wanddicke, die sich von der Wanddicke der starren Zone verringert, eine oder mehrere Wellen oder eine Kombination davon.

3. Lufteinlassvorrichtung (16) nach einem der Ansprüche 1 oder 2, **dadurch gekennzeichnet, dass** die Vorrichtung aus einem Kunststoffmaterial hergestellt ist und die starren (22) und verformbaren (24) Bereiche mindestens einer Wand durch Spritzgießen von Kunststoffmaterial hergestellt sind.

4. Lufteinlassvorrichtung (16) nach einem der Ansprüche 1 bis 3, **dadurch gekennzeichnet, dass** die Vorderkante (18) des Rahmens eine Lippe bildet, die so gestaltet ist, dass sie eine flexible Dichtung für den Kontakt mit einer Stoßfängerhaut bildet.

5. Lufteinlassvorrichtung (16) nach einem der Ansprüche 1 bis 4, wobei der Rahmen eine obere Wand (26), eine untere Wand (28) und Seitenwände (30) umfasst, wobei die Vorrichtung **dadurch gekennzeichnet ist, dass** die Seitenwände (30) einen verformbaren Bereich umfassen, der sich von der Vorderkante (18) bis zur Hinterkante (20) des Rahmens erstreckt.

6. Lufteinlassvorrichtung (16) nach einem der Ansprüche 1 bis 5, wobei der Rahmen eine obere Wand (26), eine untere Wand (28) und Seitenwände (30) umfasst, wobei die Vorrichtung **dadurch gekennzeichnet ist, dass** die Breite des verformbaren Bereichs der oberen Wand (26) zwischen dem vorderen und dem hinteren Rand größer ist als die Breite des verformbaren Bereichs der unteren Wand (28).

7. Lufteinlassvorrichtung (16) nach einem der Ansprüche 1 bis 6, **dadurch gekennzeichnet, dass** der Rahmen ferner mindestens eine vertikale Luftablenkwand (34) umfasst, die es ermöglicht, den Luftstrom zu reduzieren.

8. Kraftfahrzeug (10) mit einem vorderen Stoßfänger mit einer Stoßfanghaut (12), wobei die Stoßfanghaut einen Kühlergrill (14) umfasst; das Fahrzeug einen Motorkühler umfasst; das Fahrzeug **dadurch gekennzeichnet, dass** es ferner eine Lufteinlassvorrichtung (16) nach einem der Ansprüche 1 bis 7 umfasst, die hinter dem Kühlergrill der Stoßfanghaut angebracht und an dem Motorkühler befestigt ist.

## Claims

1. An air intake device (16) for a motor vehicle radiator, the device comprising a frame with a front edge (18) for placing in contact with a bumper skin of the motor vehicle, and a rear edge (20) for fixing to the motor vehicle radiator; the frame further comprising at least one wall extending in a transverse direction of the device, between the front edge and the rear edge, so as to form an air duct; at least one wall comprising a rigid zone (22) extending from the rear edge; and a deformable zone (24) comprising means for promoting deformation thereof in the event of an impact and extending from the front edge to the rigid zone, the rigid and deformable zones respectively comprising a front edge and a rear edge, the rear edge of the rigid zone being arranged at the rear edge (20) of the frame, the front edge of the deformable zone being arranged at the front edge (18) of the frame, and the rear edge (32) of the deformable zone being arranged at the front edge of the rigid zone; **characterized in that** the width of the deformable zone (24) varies in the longitudinal direction of the device so that the rear edge (32) of the zone deformable shows a crenelated or sinusoid pattern.

2. An air intake device (16) according to claim 1, **characterized in that** the means promoting deformation of the deformable zone (24) in the event of an impact comprise at least one of the following elements: a material different from the material of the rigid zone, a reduced wall thickness from the wall thickness of the rigid zone, one or more undulations, or a combination thereof.

3. Air intake device (16) according to either of claims 1 and 2, **characterized in that** the device is made of a plastic material, and the rigid (22) and deformable (24) zones of at least one wall are made by overmolding by injection of plastic material.

4. Air intake device (16) according to any one of claims 1 to 3, **characterized in that** the front edge (18) of the frame forms a lip configured to form a flexible seal for contact with a bumper skin.

5. Air intake device (16) according to any one of claims 1 to 4, the frame comprising an upper wall (26), a lower wall (28) and lateral walls (30), the device being **characterized in that** the lateral walls (30) comprise a deformable zone which extends from the front edge (18) to the rear edge (20) of the frame.

6. Air intake device (16) according to any one of claims 1 to 5, the frame comprising an upper wall (26), a lower wall (28) and lateral walls (30), the device is **characterized in that** the width of the deformable zone of the upper wall (26) between the front and rear edges is greater than the width of the deformable zone of the lower wall (28).

7. Air intake device (16) according to any one of claims 1 to 6, **characterized in that** the frame further comprises at least one vertical air deflection wall (34) making it possible to reduce the flow of air.

8. Motor vehicle (10) comprising a front bumper with a bumper skin (12), the bumper skin comprising a grille (14); the vehicle comprising an engine radiator; the vehicle is **characterized in that** it further comprises an air intake device (16) according to one of claims 1 to 7 mounted behind the grille of the bumper skin and fixed to the engine cooling radiator.
